**Europäisches Patentamt**

**European Patent Office**

**Office européen des brevets**

(19)

(11) Publication number: **0 056 054**
**B1**

(12) # EUROPEAN PATENT SPECIFICATION

(45) Date of publication of patent specification: **17.04.85**

(51) Int. Cl.[4]: **B 01 D 15/00,** B 01 D 27/02, C 02 F 9/00

(21) Application number: **81902148.6**

(22) Date of filing: **17.07.81**

(86) International application number:
**PCT/US81/00965**

(87) International publication number:
**WO 82/00256 04.02.82 Gazette 82/04**

(54) **WATER PURIFICATION SYSTEM.**

(30) Priority: **18.07.80 US 170023**

(43) Date of publication of application:
**21.07.82 Bulletin 82/29**

(45) Publication of the grant of the patent:
**17.04.85 Bulletin 85/16**

(84) Designated Contracting States:
**AT CH DE FR LI NL SE**

(56) References cited:
**DE-A-2 136 646**
**GB-A-1 072 227**
**GB-A-1 398 369**
**US-A-1 000 332**
**US-A-1 333 011**
**US-A-3 327 859**
**US-A-3 389 803**
**US-A-3 392 837**
**US-A-3 715 035**
**US-A-3 923 665**

(73) Proprietor: **GARTNER, William J.**
**153 Williamsburg Drive**
**Bartlett, IL 60103 (US)**

(72) Inventor: **GARTNER, William J.**
**153 Williamsburg Drive**
**Bartlett, IL 60103 (US)**

(74) Representative: **Groening, Hans Wilhelm, Dipl.-Ing.**
**Siebertstrasse 4 Postfach 860 340**
**D-8000 München 86 (DE)**

Courier Press, Leamington Spa, England.

## Description

The invention is related to a portable water purifying apparatus for treating contaminated water to provide drinking water which includes an elongated tube and filter means, a halogenated material and activated carbon granules, said tube having an outlet adapted to be inserted into the mouth of a user to apply suction to the tube so that contaminated water from a contaminated water source can be passed successively through said filter means for removing particulate matter, said halogenated material for killing harmful bacteria, viruses and the like and said activated carbon granules for removing undesirable odours, tastes and hydrocarbons.

The portable water purifying apparatus of the afore mentioned known type is described in the US—A—3 372 859. This known apparatus for treating contaminated water to provide drinking water can be kept in a protective case and consists of a corrugated filter element filled with activated carbon to provide a sorbent bed. There is provided a flexible tube communicating with said bed at one end thereof through a porous disk. The free end of said tube can be closed by a protective cap. In use, this apparatus is withdrawn from the case, the filter element is immersed in a source of contaminated water, said cap is removed from the end of tube and the user applies mouth suction to said tube end so that contaminated water is drawn through said filter element into said sorbent bed towards said porous disk and tube. The filter element serves to remove bacteria from the contaminated water flowing therethrough and is provides with pores of microscopic dimensions and sufficiently small to retain said bacteria. Preferably, it is coated with a halogenated material, such as silver chloride, silver bromide or silver iodide, in order to kill bacterial retained by the filter element, thus preventing bacteria from living and multiplying on the filter element. The filter element may include an ion exchange resin capable of removing salts deleteriously affecting taste. Thus, in the known apparatus a mechanical bacteria removal from the contaminated water and chemical killing of the retained bacteria is provided for.

In the GB—A—1 072 227 is disclosed a filter cartridge for stationary use in the purification of water by filtration for removal of particulate impurities and chemical attack on deleterious organism. Said known filter cartridges are rather bulky and not at all adapted to allow contaminated water to be passed therethrough only by suction applied by user's mouth. In detail, a hollow filter cartridge with a central bore consisting of an outer shell, an inner tube, two covers provided at the ends of outer shell and having central openings, a filter body, preferably of accreted material, a bed of a material for the emission of iodine, a second filtering body serving to retain said bed in place and to provide sufficient killing time for the bactericide supplied by said bed, a scavenging bed of activated carbon, for example, and a third filtering body, said annular means being arranged within said outer shell and said inner tube. In use, water to be treated enters through radial openings at one end of outer shell into filter cartridge and leaves it at the other end of outer shell through the central opening of cover provided at that end. The inner tube is shorter than the outer shell in order to allow the liquid to flow from the final filtering body radially into the central bore of filter cartridge communicating with said central opening of cover. In another embodiment of this prior art reference is provided a cartridge inserted into a filter unit having a housing, a head and a tubular filter body. The cartridge enclosed by said tubular filter body consists of a container having a square cross section and closed at both ends by perforated covers and of a permeable separator made of resin bonded accreted cellulose fibers, for instance, and dividing the interior of said container into a lower and an upper section, a bed of a material supplying a water soluble bactericide contained in said lower section and a scavenger bed of activated carbon, for example, contained in said upper section. In use, water leaving said tubular filter body enters said cartridge at its lower end through said lower cover to pass that bactericide supplying bed, said permeable separator serving to afford time for the bactericide to act, and said scavenger bed intended to remove said bactericide from the liquid flowing therethrough, and to leave said cartridge at its upper end through said upper cover and then said filter unit through an outlet port.

Therefore, an object of the subject invention is an improvement of the water purifying apparatus mentioned in the first paragraph in such a way that the water product is pleasant to the taste. Another object of the subject invention is a water purifying apparatus with a capacity to purify and disinfect the water greater than the filtering capacity of the apparatus.

Still another object of the subject invention is an apparatus which may be stored and periodically used for periods up to a year while retaining its effectiveness.

These and other objects are attained in accordance with the present invention, characterized in that

a) said filter means, halogenated material and activated carbon granules are disposed within said tube between said outlet thereof and an inlet for contaminated water at the other tube end which is adapted to be inserted into said contaminated water source, wherein

b) the interior of said tube is divided into five successive adjacent sections, the first and second sections adjacent to said inlet containing said filter means and respectively said halogenated material, whereas said activated carbon granules are contained within the fourth section,

c) said filter means is provided to only remove particulate matter,

d) said halogenated material for removing said harmful bacteria, viruses and the like from contaminated water flowing therethrough comprises a halogenated ion exchange resin,

e) there is provided a secondary filter means within the third section of the interior of said tube for removing additional particulate matter and

f) there is provided a final filter means within the fifth section of the interior of said tube adjacent to said outlet for removing substantially all remaining particulate matter.

A further improvement is provided by cap means for sealing said inlet and respectively said outlet when the apparatus is not in use.

Further objects of the invention together with additional features contributing thereto and advantages accruing therefrom will be apparent from the following description of one embodiment of the invention when read in conjunction with the accompanying drawings wherein:

FIGURE 1 is a perspective view of one embodiment of the subject invention;

FIGURE 2 is a cross-sectional view taken along lines 2—2 of FIGURE 1 showing the internal components of the water purifier of the subject invention.

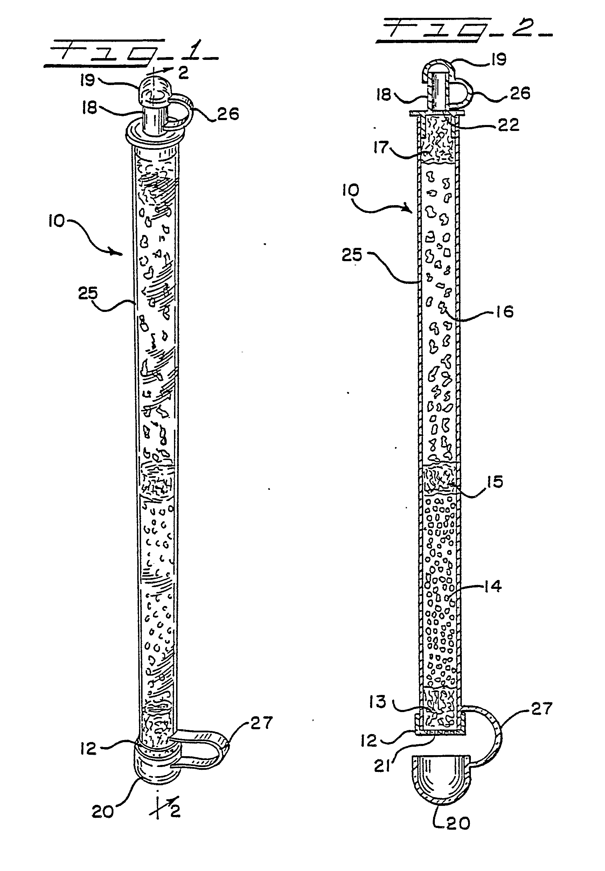

Referring now to FIGURE 1, there is shown the water purification apparatus 10 comprising one embodiment of the invention. The water purification apparatus comprises a long, slender tube 25 which may be formed of either glass, plastic or metal as desired. the tube 25 is much in the nature of a drinking straw having a diameter of such size for insertion into a user's mouth for applying suction. As shown in FIGURE 2, the tubing is preferably formed of plastic allowing it to be formed of inexpensive material. If desired, the plastic may be transparent polycarbonate in order to provide a visual sighting of the contents of the tube. In this manner, through change in color and other means of indication, it would be possible to provide a visual reference of the effectiveness of the purifying and filtration agents in the tube 25.

As shown in FIGURE 2, the tube 25 has an inlet 12 and an outlet 18. The inlet 12 has perforations 21 which allow the flow of water into the tube 25 while retaining the filtration material 13 inside the tube. Similarly, perforations 22 allow the flow of purified water from the tube while retaining the filtration material 17 inside. Caps 20 and 19 are attached by straps 27 and 26, respectively, to the tube ends 12 and 18 and may be used for preventing leakage when the purifier of the subject invention is not in use, while additionally keeping the mouthpiece 18 clean. As stated, the inlet cap 12 has perforations 21 to allow the easy flow of water into the tube 25. Adjacent inlet cap 12, inside the tube, is a primary filter material such as polyester filter fiber, which removes much of the suspended particulate matter in the incoming water. Other filtering agents or materials may be used as found appropriate. Adjacent the primary filter material 13 is purifying medium 14. Preferably, the purifying medium 14 is an iodinated cation exchange resin capable of purifying and disinfecting the incoming water, thereby instantaneously killing harmful bacteria as the water comes into contact with the resin. Commercially, an appropriate purifying medium is generally known as triiodide resin. Other bactericidal mediums may be used as desired.

Adjacent the purifying resin 14 is a secondary or intermediate filtration area containing filtration material 15 similar to the filtration material 13. If desired, filtration material 15 may provide a finer mesh size for screening out smaller particles.

Adjacent the second filtration area 15 is a granular adsorbent material 16 having a large surface area, such as activated carbon and the like, which can adsorb impurities, organic liquids, gases, tastes and odors, making the water palatable. As is known, certain other hydrocarbon material which may pass through the purifying material 14 will be adsorbed onto the activated carbon. A final segment of filter media 17 removes substantially all the remaining particulate matter prior to the exit of the now-cleansed water through end cavity 18. As with the intermediate filter material, a finer mesh size than the primary filter material may be used. On passing through each of the filter areas and the purifying and adsorbing material results in a crystal-clear, bacteria- and virus-free, good tasting water, when used with a non-saline source. According to tests required under Federal Law, water containing 200,000—300,000 escherichia-coli microorganisms per milliliter has been run through the water purification unit of the subject invention and the effluent from the unit contains less than one microorganism per 100 milliliters. In addition, the subject invention has been tested with raw sewage, river water, urine, etc., and in all cases, a clear, colorless, good tasting, bacteria- and virus-free water was the final product.

In the use of the subject invention, the end caps 19 and 20 are removed from opposing end portions 12 and 18, respectively, and the inlet portion 12 is inserted into the source of water, such as a pond or river. The user places his mouth over the mouthpiece 18 and, much as in the nature of a straw, sucks the water inward, past the filtering and purifying media within, into his mouth. Since a majority of the tube is filled with a purifying medium 14 and the absorbent medium 16, the useful life of the subject invention is determined principally by the length of time and periods of use required for the inlet filter 13 to become clogged. Thus, unless contaminated water with relatively little suspended particle matter is a constant source for purification through the subject invention, the inlet filter 13 will be clogged long before the purifying capacity of the tube of the subject invention is exhausted. With the clogging of the inlet filter 13, there can be no passage of water through the tube 25 and the user will realize that the usefulness of the tube of the subject invention has been spent and should be discarded at that time. Because of the inexpensive nature of the subject invention, it is disposable in nature and, therefore, may then be tossed into the nearest waste receptacle.

**Claims**

1. A portable water purifying apparatus for treating contaminated water to provide drinking water which includes an elongated tube (25) and filter means (13), a halogenated material (14) and activated carbon granules (16), said tube (25) having an outlet (18, 22) adapted to be inserted into the mouth of a user to apply suction to the tube (25) so that contaminated water from a contaminated water source can be passed successively through said filter means (13) for removing particulate matter, said halogenated material (14) for killing harmful bacteria, viruses and the like and said activated carbon granules (16) for removing undesirable odors, tastes and hydrocarbons, characterized in that

a) said filter means (13), halogenated material (14) and activated carbon granules (16) are disposed within said tube (25) between said outlet (18, 22) thereof and an inlet (12, 21) for contaminated water at the other tube end which is adapted to be inserted into said contaminated water source, wherein

b) the interior of said tube (25) is divided into five successive adjacent sections, the first and second sections adjacent to said inlet (12, 21) containing said filter means (13) and respectively said halogenated material (14), whereas said activated carbon granules (16) are contained within the fourth section,

c) said filter means (13) is provided to only remove particulate matter,

d) said halogenated material (14) for removing said harmful bacteria, viruses and the like from contaminated water flowing therethrough comprises a halogenated ion exchange resin,

e) there is provided a secondary filter means (15) within the third section of the interior of said tube (25) for removing additional particulate matter and

f) there is provided a final filter means (17) within the fifth section of the interior of said tube (25) adjacent to said outlet (18, 22) for removing substantially all remaining particulate matter.

2. Apparatus according to claim 1, characterized by cap means (20; 19) for sealing said inlet (12, 21) and respectively said outlet (18, 22) when the apparatus is not in use.

**Patentansprüche**

1. Tragbare Wasserreinigungsvorrichtung zur Herstellung von Trinkwasser aus verunreinigtem Wasser, welche ein sich längs erstreckendes Rohr (25) und ein Filtermittel (13), ein halogeniertes Material (14) und Aktivkohlekörner (16) umfaßt, wobei das Rohr (25) mit einem Auslaß (18, 22) zum Einsetzen in den Mund eines Benutzers zum Aufbringen einer Saugwirkung auf das Rohr (25) einsetzbar ist, so daß das verunreinigte Wasser aus einer verunreinigten Wasserquelle durch das Filtermittel (13) zum Entfernen von Feststoffteilchen, das halogenierte Material (14) zum Abtöten schädlicher Bakterien, Viren und dergleichen und die Aktivkohlekörner (16) zum Entfernen unerwünschter Gerüche, Geschmacksstoffe und Kohlenwasserstoff sukzessiv hindurchgeleitet werden kann, dadurch gekennzeichnet, daß

a) das Filtermittel (13) das halogenierte Material (14) und die Aktivkohlekörner (16) innerhalb des Rohrs (25) zwischen dem Auslaß (18, 22) desselben und einem Einlaß (12, 21) für das verunreinigte Wasser am anderen Rohrende angeordnet sind, das zum Einsetzen in eine verunreinigte Wasserquelle dient, wobei

b) der Innenraum des Rohrs (25) in fünf aufeinanderfolgende benachbarte Abschnitte unterteilt ist, von denen der erste und zweite Abschnitt in der Nähe des Einlasses (12, 21) das Filtermittel (13) bzw. das halogenierte Material (14) enthält, während die Aktivkohlekörner (16) in dem vierten Abschnitt enthalten sind,

c) das Filtermittel (13) nur zum Entfernen der Feststoffteilchen dient,

d) das halogenierte Material (14) zum Entfernen der schädlichen Bakterien, Viren und dergleichen aus dem durchfließenden verunreinigten Wasser aus einem halogeniertem Ionenaustauscherharz besteht,

e) daß ein zweites Filtermittel (15) im dritten Abschnitt des Innenraums des Rohrs (25) zum Entfernen zusätzlicher Feststoffteilchen vorgesehen ist und

f) ein am Ende befindliches Filtermittel (17) im fünften Abschnitt des inneren Raums des Rohrs (25) nahe dem Auslaß (18, 22) zum Entfernen von im wesentlichen sämtlichen restlichen Feststoffteilchen vorgesehen ist.

2. Vorrichtung nach Anspruch 1, gekennzeichnet durch eine Kappe (20; 19) zum Verschließen des Einlasses (12, 21) bzw. des Auslasses (18, 22), wenn die Vorrichtung nicht in Gebrauch ist.

**Revendications**

1. Appareil portable pour la purification de l'eau et le traitement d'eau contaminée pour la production d'eau de boisson, cet appareil comportant un tube allongé (25) et un filtre (13), une matière halogénée (14) et des granules de charbon actif (16), ledit tube (25) ayant une sortie (18, 22) propre à être introduite dans la bouche du consommateur pour l'application d'une aspiration au tube (25) de sorte que l'eau contaminée provenant d'une source d'eau contaminée puisse traverser successivement le filtre (13) pour l'enlèvement des matières en particules, ladite matière halogénée (14) pour tuer les bactéries nocives, virus et analogues, et lesdits granules de charbon actif (16) pour l'élimination des odeurs, des saveurs et des hydrocarbures indésirables, caractérisé en ce que

a) ledit filtre (13), la matière halogénée (14) et les granules de charbon actif (16) sont disposés à l'intérieur dudit tube (25) entre ladite sortie (18, 22) de celui-ci et une entrée (12, 21) d'eau contaminée située à l'autre extrémité du tube et adaptée à être plongée dans ladite source d'eau contaminée, et dans lequel

b) l'intérieur dudit tube (25) est divisé en cinq sections voisines et successives, la première et la seconde section voisines de ladite entrée (12, 21) contenant ledit filtre (13) et respectivement ladite matière halogénée (14), tandis que les granules de charbon actif (16) sont contenus dans la quatrième section,

c) ledit filtre (13) est prévu seulement pour l'enlèvement des matières en particules,

d) ladite matière halogénée (14) pour l'enlèvement des bactéries nocives, virus et analogues, de l'eau contaminée qui la traverse, contient une résine halogénée échangeuse d'ions,

e) il est prévu un second filtre (15) dans la troisième section à l'intérieur dudit tube (25) pour l'enlèvement d'autres matières en particules, et

f) il est prévu un filtre terminal (17) dans la cinquième section à l'intérieur dudit tube (25), au voisinage de ladite sortie (18, 22) pour l'enlèvement de pratiquement toute la matière en particules restante.

2. Appareil selon la revendication 1, caractérisé par un capuchon (20; 19) pour fermer ladite entrée (12, 21) et respectivement ladite sortie (18, 22), lorsque l'appareil n'est pas utilisé.

_FIG_1_

_FIG_2_